Europäisches Patentamt

(19) European Patent Office

Office européen des brevets

(11) Veröffentlichungsnummer: **0 162 267**
**A2**

(12) # EUROPÄISCHE PATENTANMELDUNG

(21) Anmeldenummer: 85104370.3

(22) Anmeldetag: 11.04.85

(51) Int. Cl.⁴: **B 23 K 9/04**
**B 23 K 33/00**

(30) Priorität: 24.05.84 DE 3419400
02.04.85 DE 3512001

(43) Veröffentlichungstag der Anmeldung:
27.11.85 Patentblatt 85/48

(84) Benannte Vertragsstaaten:
AT CH DE FR GB IT LI NL SE

(71) Anmelder: M.A.N. MASCHINENFABRIK
AUGSBURG-NÜRNBERG Aktiengesellschaft
Bahnhofstrasse 66
D-4200 Oberhausen(DE)

(72) Erfinder: Million, Karl, Dr.-Ing.
Am Grafenbusch 46
D-4200 Oberhausen 1(DE)

(72) Erfinder: Zimmermann, Horst
Genterstrasse 111
D-4200 Oberhausen 14(DE)

(72) Erfinder: Herrmann, Bodo
Hebeleckstrasse 143
D-4250 Bottrop(DE)

(54) Verfahren zum Schweissverbinden von formgebend geschweissten Werkstücken.

(57) Bei einem Verfahren zum Schweißverbinden von formgebend geschweißten Werkstücken werden die zu verbindenden Enden der Formschweißteile während der Herstellung durch das angewandte Vielraupenschweißen auf eine vorgegebene Nahtflankenform gebracht, die nachträglich ohne mechanische Bearbeitung durch ein beliebiges Schweißverfahren miteinander verschweißt werden.

EP 0 162 267 A2

0162267

Die Erfindung betrifft ein Verfahren zum Schweißverbinden von vielraupig formgebend geschweißten Werkstücken.

Als formgebendes Schweißen wird das Verfahren zur Herstellung von Einzelteilen oder Aufschweißteilen bezeichnet, die gänzlich aus Schweißgut bestehen. Das formgebende Schweißen unterscheidet sich grundsätzlich von den z.T. aus Schweißverfahren entwickelten "Formschmelz"-Technologien (z.B. Elektro-Schlacke-Gießen). Diese Technologie weist keine Gemeinsamkeiten mehr mit der Schweißtechnik und insofern auch nicht mit dem Formschweißverfahren auf.

In der Praxis des formgebenden Schweißens haben sich zwei Arten des kontinuierlichen, senkrecht gerichteten Materialaufbaus bewährt, nämlich das sogenannte Wickelverfahren mit radialem Schweißgutaufbau und das sogenannte Axialverfahren mit zur Werkstückachse parallel verlaufendem Materialaufbau.

Das Axialverfahren ist universeller als das Wickelverfahren, da es für fast alle geometrische, auch nicht rotationssymmetrische Formen zur Anwendung gebracht werden kann.

Vielraupig, beispielsweise im Unterpulver(UP)-Verfahren formgebend geschweißte Bauteile, wie zylindrische Hohlkörper, räumlich gekrümmte Behälterböden usw., werden, ähnlich wie aus Blechen oder aus Schmiedeteilen hergestellte Halbzeuge, für Verbindungsschweißungen mechanisch oder durch Brennschneiden bearbeitet. Bei schweren, dickwandigen Teilen, bei denen vorwiegend mechanisch angearbeitete Nahtflanken verwendet werden, wird der Bearbeitungsaufwand umso höher, je größere Öffnungswinkel für die Nahtvorbereitung verwendet werden. Dementsprechend wachsen auch die Verluste durch Abarbeiten des formgeschweißten Werkstücks und durch Wiederauffüllen der entstandenen Schweißnaht beim Verbindungsschweißen.

Um die Nahtöffnungswinkel zu reduzieren, hat sich eine Tendenz zu möglichst schmalen, steilwinkligen Nahtformen entwickelt, die jedoch andererseits zu erhöhten Präzisionsanforderungen bei der Nahtanarbeitung und zur Einführung von technisch anspruchsvolleren Engspaltschweißverfahren geführt hat.

Wenn die einzelnen Bauteile im formgebenden Schweißverfahren hergestellt werden, so behandelt man bisher diese formgeschweißten Teile hinsichtlich ihrer Vorbereitung zum Zusammenschweißen genauso wie die oben beschriebenen Schmiedeteile. Die zu verbindenden Bauteile werden an den Verbindungsflanken mit Zugabe versehen für die anschließende mechanische Bearbeitung der Nahtflanken. Man ist also bisher der Ansicht, daß formgeschweißte Bauteile an ihren Nahtflanken nicht unbearbeitet mittels Formschweißen verbunden werden können.

Aufgabe der Erfindung ist es, das Verfahren zum Schweißverbinden von formgebend geschweißten Werkstücken zu vereinfachen, damit Zeit und Material eingespart werden, ohne jedoch die Qualität der Schweißverbindung bzw. des Werkstückes ungünstig zu beeinflussen.

Erfindungsgemäß werden die zu verbindenden Enden der Werkstücke während der Herstellung durch das angewandte Vielraupenschweißen auf eine vorgegebene Nahtflankenform gebracht, die nachträglich ohne mechanische Bearbeitung durch ein beliebiges Schweißverfahren miteinander verschweißt werden.

Die zu verbindenden Werkstücke werden hierfür auf eine der üblichen Nahtflankenformen formgebend geschweißt, beispielsweise auf K-, X-, U-, V-Nahtflankenform usw. gebracht. Dies kann mit dem sogenannten Axialverfahren, aber

- 4 -

0162267

auch durch Anwendung des sogenannten Wickelverfahrens geschehen. Anschließend werden die Werkstückteile mit ihren formgebend geschweißten Nahtflanken in der Werkstatt oder aber auf der Baustelle zu einem Werkstück "zusammengestellt" und mit Hilfe des formgebenden Schweißens oder eines beliebigen anderen Schweißverfahrens als Verbindungsschweißung ohne Materialverlust zusammengeschweißt.

0162267

Patentanspruch:

Verfahren zum Schweißverbinden von vielraupig formgebend geschweißten Werkstücken,

dadurch gekennzeichnet,

daß die zu verbindenden Enden der Formschweißteile während der Herstellung durch das angewandte Vielraupenschweißen auf eine vorgegebene Nahtflankenform gebracht werden, die nachträglich ohne mechanische Bearbeitung durch ein beliebiges Schweißverfahren miteinander verschweißt werden.